# EUROPÄISCHE PATENTSCHRIFT

(11) **EP 2 834 022 B1**
(45) Veröffentlichungstag und Bekanntmachung des Hinweises auf die Patenterteilung: **02.03.2016**
(21) Anmeldenummer: 12715016.7
(22) Anmeldetag: 03.04.2012
(51) Int. Cl.: B21D 5/01

(54) **VORRICHTUNG UND VERFAHREN ZUM HERSTELLEN VON ZUMINDEST TEILWEISE GESCHLOSSENEN PROFILEN ODER ROHRFÖRMIGEN BAUTEILEN AUS METALLBLECH**
DEVICE AND METHOD FOR PRODUCING AT LEAST PARTIALLY CLOSED PROFILES OR TUBULAR COMPONENTS FROM METAL SHEET
DISPOSITIF ET PROCÉDÉ DE FABRICATION DE PROFILÉS OU D'ÉLÉMENTS TUBULAIRES AU MOINS EN PARTIE FERMÉS À PARTIR DE TÔLE MÉTALLIQUE

(43) Veröffentlichungstag der Anmeldung: 11.02.2015
(73) Patentinhaber: ThyssenKrupp Steel Europe AG, 47166 Duisburg (DE)
(72) Erfinder: GROßERÜSCHKAMP, Thomas, 47119 Duisburg (DE)
(74) Vertreter: Cohausz & Florack
(86) Internationale Anmeldenummer: PCT/EP2012/056066
(87) Internationale Veröffentlichungsnummer: WO 2013/149653

(56) Entgegenhaltungen:
- DE-A1-102007 021 798
- DE-A1-102009 003 668
- DE-A1-102010 037 533
- JP-A- 2011 104 653

## Beschreibung

Die Erfindung betrifft eine Vorrichtung zum Herstellen von zumindest teilweise geschlossenen Profilen (Schlitzprofilen) oder rohrförmigen Bauteilen aus Metallblech, mit einem eine Matrize aufweisenden ersten Werkzeugteil, einem Abkantbacken aufweisenden zweiten Werkzeugteil und mindestens einem Stützkern, der in Kontakt mit einem zugeschnittenen, U-förmig umgeformten Metallblechabschnitt zwischen die Abkantbacken einschiebbar ist (siehe z.B. DE-A-102009003668). Ferner betrifft die Erfindung ein Verfahren zum Herstellen eines zumindest teilweise geschlossenen Profils (Schlitzprofils) oder rohrförmigen Bauteils aus Metallblech.

Zur Herstellung von zumindest teilweise geschlossenen Profilen (Schlitzprofilen) oder Halbzeugen können kontinuierliche oder diskontinuierliche Umformverfahren verwendet werden. Das kontinuierliche Umformen erfolgt beispielsweise durch Rollformen. Diskontinuierliche Verfahren bieten sich an, wenn aufgrund komplexer Profil- bzw. Halbzeuggeometrie ein kontinuierliches Rollformen nicht angewandt werden kann. Beispielsweise ist das sogenannte U-O-Umformen zur diskontinuierlichen Herstellung von zumindest teilweise geschlossenen Profilen oder Halbzeugen bekannt.

Das Herstellen von dreidimensional geformten Bauteilen aus Metallblech im Folgeverbundverfahren gehört zum Stand der Technik (siehe z.B. US 2002/0162297 A1, Figuren 6 bis 8). Beim Herstellen von Bauteilen durch Tiefziehen in Folgeverbundwerkzeugen kommt es mitunter zu einem unkontrollierten Rückfedern von umgeformten Bauteilabschnitten, so dass die erhaltenen Bauteile gegebenenfalls nicht die geforderte Maßhaltigkeit bzw. Formgenauigkeit aufweisen. Eine bekannte Maßnahme, durch die einem unkontrollierten Rückfedern relevanter Bauteilabschnitte entgegengewirkt werden kann, ist das Kalibrieren, bei dem betreffende Bauteilbereiche zur Verbesserung der Maßhaltigkeit nochmals geringfügig umgeformt werden.

Im Fahrzeugbau werden geschlossene Profile aus Metallblech als Strukturbauteile, beispielsweise als Stoßfänger und Stoßenergie absorbierende Hohlträger verwendet. Um ein vorzeitiges Versagen solcher Bauteile zu verhindern, sollten herstellungsbedingte Eigenspannungen in diesen Bauteilen minimiert werden.

Der vorliegenden Erfindung liegt die Aufgabe zugrunde, eine Vorrichtung sowie ein Verfahren zum Herstellen von zumindest teilweise geschlossenen Profilen oder rohrförmigen Bauteilen aus Metallblech zur Verfügung zu stellen, mit welcher bzw. mit welchem sich solche Profile oder Bauteile mit hoher Maßhaltigkeit und ohne oder nur geringen Eigenspannungen effizient herstellen lassen.

Gemäß einer ersten Lehre der vorliegenden Erfindung wird die oben aufgezeigte Aufgabe hinsichtlich einer Vorrichtung der eingangs genannten Art dadurch gelöst, dass die Einschubbewegung des Stützkerns zwischen die Abkantbacken durch einen Anschlag begrenzt ist und der Stützkern in seiner durch den Anschlag begrenzten Einschubstellung gegenüber den Abkantbacken in Richtung der Matrize vorsteht, wobei der Stützkern auf einem relativ zu der Matrize beweglichen Träger angeordnet ist, und wobei den Abkantbacken mindestens ein starr damit verbundenes Verdrängungselement zugeordnet ist, das den Träger berührt, wenn der abgekantete Metallblechabschnitt den Stützkern umgreift, und bei fortgesetzter Bewegung der Abkantbacken in Richtung Matrize den Träger verschiebt und/oder der Träger bewegt wird, so dass das aus dem Metallblechabschnitt gebildete Profil oder Bauteil zum Zwecke seiner Kalibrierung und/oder Stauchung mit dem Stützkern in die Matrize einführbar ist.

Ferner wird die oben aufgezeigte Aufgabe hinsichtlich eines gattungsgemäßen Verfahrens erfindungsgemäß dadurch gelöst, dass
- in einem bandförmigen Metallblech eine umzuformende Platine freigeschnitten wird, so dass die Platine über mindestens zwei Verbindungsstege mit dem bandförmigen Metallblech verbunden bleibt,
- in Transportrichtung betrachtet vordere und hintere Kantenbereiche der mit dem bandförmigen Metallblech verbundenen Platine abgekantet werden, so dass die Platine im Wesentlichen U-förmig vorgeformt wird,
- die so vorgeformte, mit dem bandförmigen Metallblech verbundene Platine mittels Abkantbacken und mindestens eines zwischen den Abkantbacken einschiebbar positionierbaren Stützkerns, der auf einem relativ zu einer Matrize beweglichen Träger angeordnet ist, zu einem zumindest teilweise geschlossenen Profil oder rohrförmigen Bauteil umgeformt wird, und
- das Profil oder Bauteil mit dem darin angeordneten Stützkern unter Bewegung des Trägers relativ zu der Matrize in eine Vertiefung der Matrize eingeführt und dadurch mittels derselben kalibriert und/oder gestaucht wird.

Durch das erfindungsgemäße Verfahren bzw. mittels der erfindungsgemäßen Vorrichtung lassen sich rückfederungsfreie oder weitestgehend rückfederungsfreie Schlitzprofile in einem Werkzeug, das vorzugsweise in einer Folgeverbundpresse integriert ist, auf effiziente Weise herstellen. Anschließend können diese rückfederungsfreien Schlitzprofile durch Verschweißen ihrer Längskanten im Stumpfstoß ohne aufwendige Spanntechnik zu einem geschlossenen Profil weiter bearbeitet werden. Mittels der erfindungsgemäßen Vorrichtung bzw. des erfindungsgemäßen Verfahrens kann nicht nur einem unkontrollierten Rückfedern von Abschnitten des erzeugten Schlitzprofils entgegengewirkt werden, insbesondere können durch das Kalibrieren und/oder Stauchen des Längskantenbereichs des Schlitzprofils in der Vertiefung der Matrize Eigenspannungen in dem erzeugten Bauteil minimiert werden. Wenn es sich bei dem Bauteil beispielsweise um ein Auffahrunfall relevantes, stoßabsorbierendes Bauteil eines Kraftfahrzeuges handelt, kann durch die erfindungsgemäße Minimierung der Eigenspannungen des Bauteils einem vorzeitigen Bauteilversagen entgegengewirkt werden.

Eine vorteilhafte Ausgestaltung der erfindungsgemäßen Vorrichtung sieht vor, dass zwischen den Abkantbacken ein bewegliches Druckstück angeordnet ist, das beim Abkanten des Metallblechabschnittes mittels der Abkantbacken mit dem Stützkern bewegt wird, wobei das Druckstück vorzugsweise federnd gelagert ist und vorzugsweise durch den Stützkern verdrängt wird. Das Druckstück übernimmt die Funktion eines Niederhalters, wodurch eine kontrollierte Abkantung und/oder eine einwandfreie Ausformung des der Längsnaht gegenüberliegenden Bereichs möglich ist. Alternativ zu der federnden Lagerung des Druckstückes sind alle bekannten Mittel zur aktiven Ansteuerung bzw. zum Antrieb des Druckstücks möglich, zum Beispiel ein hydraulischer und/oder pneumatischer Antrieb bzw. eine entsprechende Ansteuerung.

Eine weitere vorteilhafte Ausgestaltung der erfindungsgemäßen Vorrichtung ist dadurch gekennzeichnet, dass der Träger mit einer den Stützkern stützenden Führung versehen ist, die mindestens zwei voneinander beabstandte Führungsabschnitte aufweist, in denen kanalförmige, miteinander fluchtende Führungsbahnen zur Aufnahme des Stützkernes ausgebildet sind, wobei die Matrize zwischen den beiden Führungsabschnitten angeordnet ist. Hierdurch wird eine zuverlässige und robuste Abstützung des verschiebbaren Stützkernes erreicht. Die mindestens zwei voneinander beabstandten Führungsabschnitte des Stützkernes können dabei auf dem gegenüber der Matrize beweglichen Träger auswechselbar montiert sein, so dass bei Bedarf durch einen Wechsel der Führungsabschnitte und des Stützkernes gegen einen geometrisch anders ausgebildeten Stützkern und dazu passenden Führungsabschnitten auf der erfindungsgemäßen Vorrichtung verschiedene Schlitzprofile hergestellt werden können. Die Abkantbacken und das gegebenenfalls dazwischen beweglich angeordnete, vorzugsweise federnd gelagerte Druckstück sind hierzu vorzugsweise ebenfalls auswechselbar an einer Platte oder dergleichen des zweiten Werkzeugteils montiert.

Eine weitere vorteilhafte Ausgestaltung der erfindungsgemäßen Vorrichtung sieht vor, dass der Träger, auf dem der Stützkern angeordnet ist, insbesondere über eine Vielzahl von Federelementen, vorzugsweise Unterluftbolzen federnd auf einer Grundplatte abgestützt ist. Durch geeignete Federelemente, beispielsweise Unterluftbolzen, lässt sich zuverlässig eine Federkraft definieren oder vorzugsweise flexibel einstellen, die größer als die Kraft ist, die benötigt wird, um ein freigeschnittenes, U-förmig vorgeformtes Metallblech abzukanten, so dass es nach dieser Abkantung als nahezu geschlossenes Schlitzprofil den Stützkern umgreift. Alternativ sind als Antrieb bzw. zur Ansteuerung des Trägers alle gängigen Mittel möglich, zum Beispiel ein hydraulischer und/oder pneumatischer Antrieb bzw. eine entsprechende Ansteuerung.

Eine weitere bevorzugte Ausgestaltung der erfindungsgemäßen Vorrichtung sieht vor, dass an der Unterseite des Trägers, auf dem der Stützkern angeordnet ist, nach unten vorstehende Distanzelemente vorgesehen sind. Diese Ausgestaltung ermöglicht, dass die Dicke des Trägers auf ein zweckmäßiges Maß reduziert werden kann, ohne dass die Stabilität der Vorrichtung, insbesondere des Trägers dadurch nachteilig beeinträchtigt wird. Eine erhebliche Überdimensionierung des Trägers, die unnötige Materialkosten verursachen sowie die Abstützung und Bewegung einer unnötig hohen Masse mit sich bringen würde, kann auf diese Weise vermieden werden. Darüber hinaus sind die Distanzelemente vorzugsweise höheneinstellbar ausgebildet. Hierdurch ist eine optimale Justierung der Anschlagstellung der Distanzelemente bzw. des Trägers, auf dem der Stützkern angeordnet ist, relativ zu der Matrize möglich.

In weiterer Ausgestaltung der erfindungsgemäßen Vorrichtung sind die Abkantbacken und das mindestens eine Verdrängungselement miteinander über eine Kopfplatte verbunden. Diese Ausgestaltung ist nicht nur fertigungstechnisch günstig, sie ermöglicht gegebenenfalls auch einen einfachen Wechsel der Abkantbacken und des mindestens einen Verdrängungselements gegen geometrisch anders ausgebildete Abkantbacken und dazu passende Verdrängungselemente (Verdränger), so dass auf der erfindungsgemäßen Vorrichtung bei Bedarf verschieden ausgebildete Schlitzprofile hergestellt werden können. Das bzw. die Verdrängungselemente (Verdränger) sind vorzugsweise bolzenförmig und/oder längenverstellbar ausgebildet.

Eine konstruktiv einfache und zugleich zuverlässige Führung des zwischen den Abkantbacken beweglich angeordneten Druckstückes ergibt sich, wenn gemäß einer weiteren bevorzugten Ausgestaltung der erfindungsgemäßen Vorrichtung die Kopfplatte, an der die Abkantbacken vorgesehen bzw. befestigt sind, Bohrungen oder Durchbrechungen zur Führung von mit dem Druckstück verbundenen Führungsstiften aufweist.

Es kann aus unterschiedlichen Gründen erwünscht sein, dass die mit der erfindungsgemäßen Vorrichtung hergestellten rohrförmigen Bauteile bzw. Schlitzprofile eine sich in Längsrichtung verändernde Querschnittform aufweisen. Ein Grund hierfür kann beispielsweise in einer Erhöhung der Biegesteifigkeit des Profils bzw. Bauteils bei konstantem oder verringertem Bauteilgewicht sein. Ein weiterer Grund kann beispielsweise in der Einstellung eines definierten Deformationsverhaltens bei Crash relevanten Bauteilen sein. Hierzu sieht eine vorteilhafte Ausgestaltung der erfindungsgemäßen Vorrichtung vor, dass der Stützkern zwei, drei oder mehr Abschnitte unterschiedlicher Querschnittsform aufweist, wobei der Durchmesser der Querschnittsform bei drei oder mehr Abschnitten von einem kleinsten Durchmesser zu einem größten Durchmesser stufenweise oder kontinuierlich zunimmt, und wobei die Abkantbacken eine den Stützkern mit einem daran anliegenden Metallblechabschnitt aufnehmende Ausnehmung begrenzen, die entsprechend dem Stützkern stufenförmig oder kontinuierlich erweitert ist.

Hinsichtlich der Herstellung von rohrförmigen Schlitzprofilen mit vergleichsweise komplexen Geometrien ist es ferner vorteilhaft, wenn die erfindungsgemäße Vorrichtung zwei Stützkerne aufweist, die symmetrisch sein können bzw. sich bezüglich ihrer Querschnittsform unterscheiden. Das Einfahren bzw. Zurückfahren der Stützkerne erfolgt dabei an den gegenüberliegenden Enden des jeweiligen Schlitzprofils.

Der zweite Stützkern kann dabei zwei, drei oder mehr Abschnitte unterschiedlicher Querschnittsform aufweisen, wobei der Durchmesser der Querschnittsform bei drei oder mehr Abschnitten von einem kleinsten Durchmesser zu einem größten Durchmesser stufenweise oder kontinuierlich zunimmt, und wobei die Abkantbacken eine den zweiten Stützkern mit einem daran anliegenden Metallblechabschnitt aufnehmende Ausnehmung begrenzen, die entsprechend dem zweiten Stützkern stufenförmig oder kontinuierlich erweitert ist.

Nach einer weiteren vorteilhaften Ausgestaltung ist die erfindungsgemäße Vorrichtung nicht auf die Herstellung eines einzelnen Bauteils pro Hub beschränkt. Denn vorzugsweise kann sie auch als Doppel-(Folgeverbund)-Werkzeug zum zeitgleichen Formen von zwei Bauteilen, d.h. von zwei zumindest teilweise geschlossenen Profilen oder rohrförmigen Bauteilen ausgebildet sein.

Nachfolgend wird die Erfindung anhand einer Ausführungsbeispiele darstellenden Zeichnung näher erläutert. Es zeigen schematisch:
- Fig. 1 und Fig. 2: ein Ausführungsbeispiel einer erfindungsgemäßen Vorrichtung in perspektivischer Ansicht bzw. in einer Seitenansicht;
- Fig. 3: eine Schnittansicht der Vorrichtung entlang der Schnittlinie III-III der Fig. 2 mit einem U-förmig vorgeformten Metallblechabschnitt;
- Fig. 4 bis Fig. 6: Schnittansichten der Vorrichtung während verschiedener Zeitpunkte bei der Durchführung eines erfindungsgemäßen Verfahrens zur Herstellung eines zumindest teilweise geschlossenen Profils oder rohrförmigen Bauteils aus Metallblech;
- Fig. 7: die Vorrichtung in perspektivischer Ansicht zum Zeitpunkt gemäß Fig. 6;
- Fig. 8: die Vorrichtung in geöffnetem Zustand in Schnitt-ansicht mit dem fertig geformten Profil oder Bauteil;
- Fig. 9: ein streifen- oder bandförmiges Metallblech, in dem umzuformende Blechabschnitte freigeschnitten, vorgeformt bzw. zu einem geschlossenen Profil (rohrförmigen Bauteil) umgeformt sind, in perspektivischer Ansicht; und
- Fig. 10: eine erfindungsgemäße Vorrichtung, die als Folgeverbundwerkzeug für eine Folgeverbundpresse ausgebildet ist, und ein streifen- oder bandförmiges Metallblech gemäß Fig. 9, in perspektivischer Ansicht.

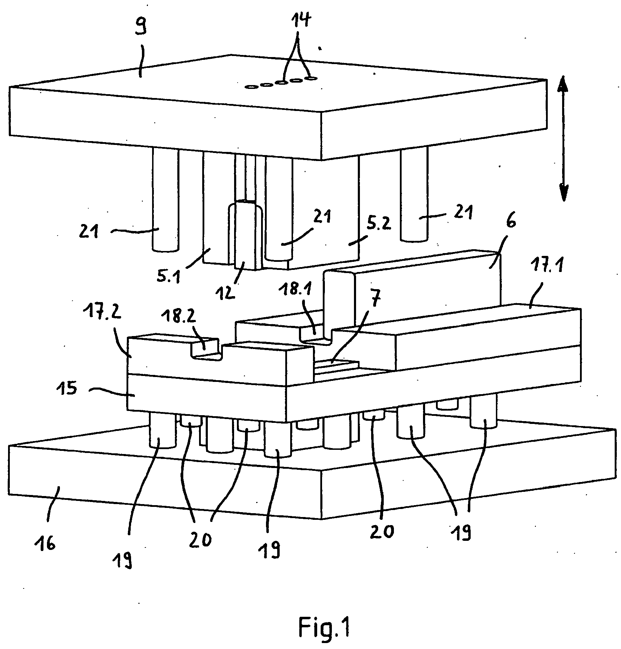

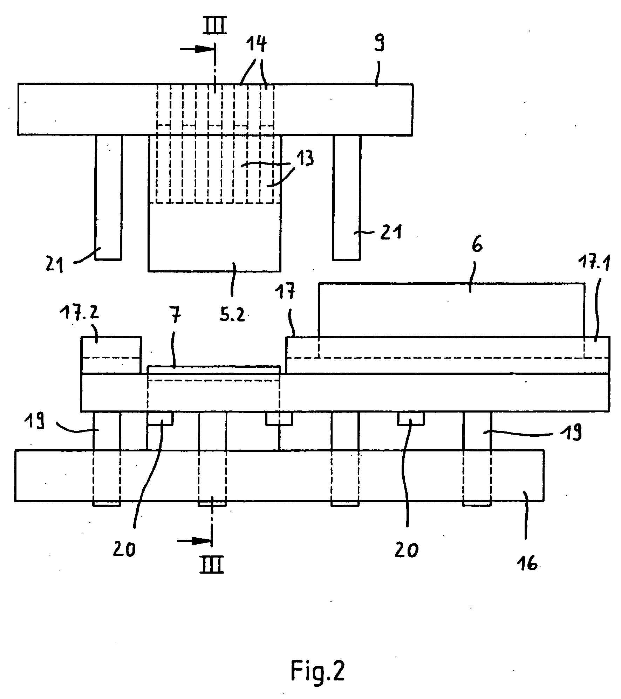

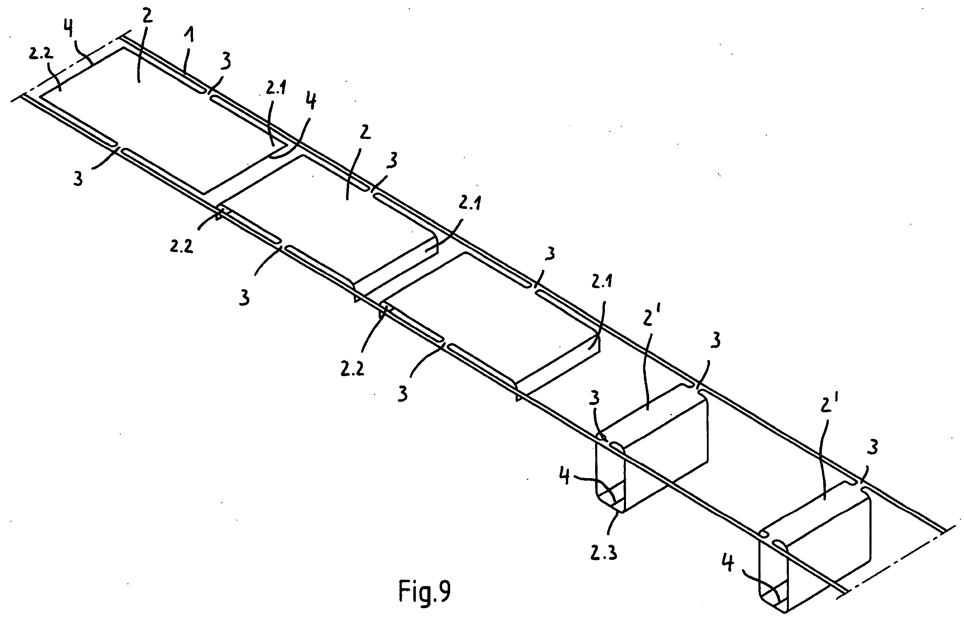

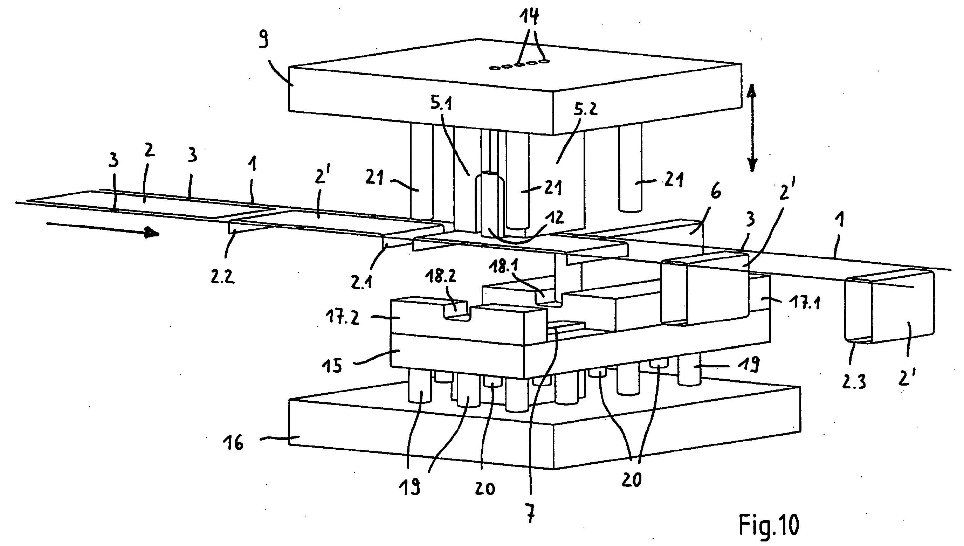

In den Figuren 1 und 2 ist ein Ausführungsbeispiel einer erfindungsgemäßen Vorrichtung zum Herstellen von zumindest teilweise geschlossenen Profilen oder rohrförmigen Bauteilen aus Metallblech dargestellt. Die Vorrichtung wird bzw. ist in einer Folgeverbundpresse integriert, in der aus einem streifen- oder bandförmigen Metallblech 1 zunächst mittels Stanzwerkzeugen (nicht gezeigt) oder dergleichen platinenartige Werkstücke 2 freigeschnitten werden (siehe Fig. 9 und 10).

Die freigeschnittenen Werkstücke (Platinen) 2 bleiben während ihres Umformens in der erfindungsgemäßen Vorrichtung über zwei Verbindungsstege 3 mit dem streifen- oder bandförmigen Metallblech 1 verbunden. Die Verbindungsstege 3, die an den quer zur Transportrichtung des Metallblechbandes 1 verlaufenden Seiten des jeweiligen Werkstückes 2 verbleiben, können nach Abschluss einer Kalibrierung des durch Abkanten geformten Bauteils 2' oder gegebenenfalls erst nach einem Verschweißen der Längskanten 4 des jeweiligen rohrförmigen Bauteils 2' von dem Metallblechband 1 abgetrennt werden.

Vor Eintritt in die erfindungsgemäße Vorrichtung werden der in Transportrichtung betrachtet vordere und hintere Kantenbereich 2.1, 2.2 der mit dem Metallblechband 1 verbundenen Platine 2 abgekantet, so dass die Platine 2 danach eine im Wesentlichen U-förmige Querschnittsform als Vorform aufweist. Die abgekanteten Randbereiche 2.1, 2.2 der Platine 2 sind dabei relativ schmal. Aneinandergesetzt bilden sie zusammen eine Seite, beispielsweise einen Boden 2.3, des herzustellenden Hohlprofils (Bauteils) 2'.

Die so vorgeformte, mit dem Metallblechband 1 verbundene Platine 2 wird dann in der erfindungsgemäßen Vorrichtung mittels Abkantbacken 5.1, 5.2 und mindestens eines zwischen den Abkantbacken einschiebbar positionierbaren Stützkerns 6 zu einem zumindest teilweise geschlossenen Profil oder rohrförmigen Bauteil 2' umgeformt.

Die erfindungsgemäße Vorrichtung, die auch als Folgeverbundwerkzeug bezeichnet werden kann, umfasst ein eine Matrize 7 aufweisendes erstes Werkzeugteil, ein die Abkantbacken 5.1, 5.2 aufweisendes zweites Werkzeugteil und den mindestens einen Stützkern (Schieber) 6. Die in einem bestimmten Abstand voneinander angeordneten Abkantbacken 5.1, 5.2 definieren einen Spalt 8, in den der Stützkern 6 in Kontakt mit dem freigeschnittenen, U-förmig vorgeformten Blechabschnitt 2 eingeschoben werden kann.

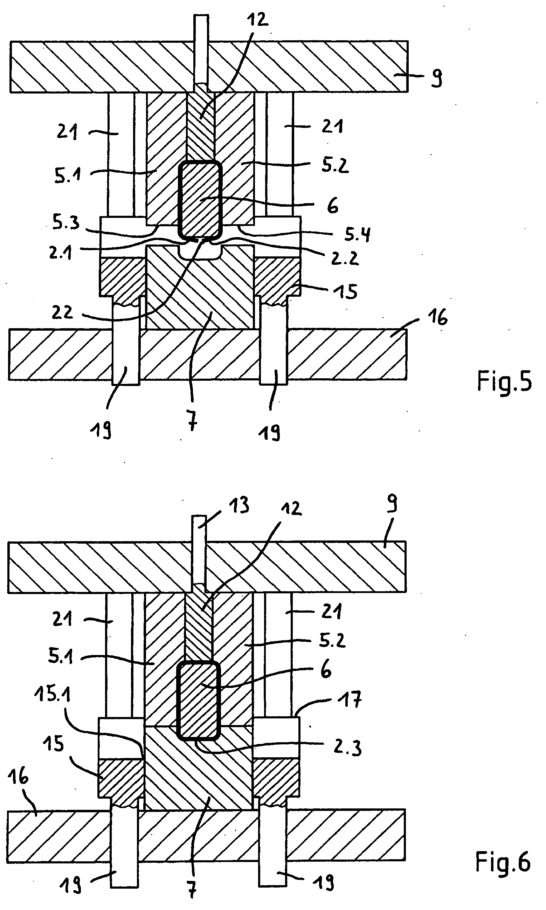

Die Abkantbacken 5.1, 5.2 sind an einer Kopfplatte 9 angebracht oder lösbar befestigt. Der von den Abkantbacken 5.1, 5.2 begrenzte Spalt (Hohlraum) 8, in den der Stützkern 6 eingeschoben werden kann, geht in einen schmaleren Spalt (Hohlraum) 10 über. Durch den einen Anschlag 11 definierenden Absatz zwischen dem breiteren Spalt 8 und dem schmaleren Spalt 10 ist die Einschubbewegung des Stützkernes 6 begrenzt. Zwischen den Abkantbacken 5.1, 5.2 ist ein Druckstück (Gesenkeinlage, Niederhalter) 12 angeordnet, das vorzugsweise federnd an der Kopfplatte 9 gelagert oder abgestützt ist. Das Druckstück 12 wird beim Einschieben des Stützkernes 6 in den durch die Abkantbacken 5.1, 5.2 definierten breiteren Spalt 8 aus diesem in den schmaleren Spalt 10 verdrängt. Der Spalt 8 und der Stützkern 6 sind so bemessen, dass der Stützkern in seiner durch den Anschlag 11 begrenzten Einschubstellung gegenüber den Abkantbacken 5.1, 5.2 in Richtung der Matrize 7 vorsteht (vgl. Fig. 5). Das Druckstück 12 kann auch durch andere gängige Mittel aktiv angesteuert bzw. angetrieben werden, z.B. durch hydraulische und/oder pneumatische Mittel.

Das Druckstück 12 ist mit einer Reihe von voneinander beabstandeten Stiften (Bolzen) 13 versehen, die gleitend in Bohrungen oder Durchbrechungen 14 geführt sind, welche angrenzend an den schmaleren Spalt 10 zwischen den Abkantbacken 5.1, 5.2 in die Kopfplatte 9 eingebracht sind.

Der Stützkern 6 ist auf einem Träger 15 angeordnet. Der Träger 15 ist platten- oder rahmenförmig ausgebildet und vorzugsweise federnd auf einer Grundplatte 16 gelagert. Der Träger 15 kann aber auch durch andere gängige Mittel aktiv gesteuert bzw. angetrieben werden, z.B. durch hydraulische und/oder pneumatische Mittel.

Der Träger 15 ist mit einer den Stützkern 6 stützenden Führung 17 versehen. Die Führung 17 ist beispielsweise aus zwei voneinander beabstandten Führungsabschnitten 17.1, 17.2 gebildet, in denen kanalförmige, miteinander fluchtende Führungsbahnen 18.1, 18.2 zur Aufnahme des Stützkernes 6 ausgebildet sind. Einer (17.1) der Führungsabschnitte ist dabei wesentlich länger als der andere Führungsabschnitt 17.2 ausgebildet. Die Länge des längeren Führungsabschnittes 17.1 entspricht vorzugsweise mindestens der Länge des Stützkernes 6 (siehe Figuren 1 und 2). Die Länge des Führungskanals 18.2 des kürzeren Führungsabschnittes 17.2 beträgt ein Bruchteil der Länge des Stützkernes 6 bzw. des Führungskanals 18.1 des längeren Führungsabschnittes 17.1, beispielsweise weniger als 1/5 der Länge des längeren Führungsabschnittes 17.1.

Der plattenförmige oder rahmenförmige Träger 15 ist vorzugsweise über eine Vielzahl von Unterluftbolzen 19 oder alternativen Federungselementen federnd auf der Grundplatte 16 abgestützt. Der Träger 15 kann auch als Federboden bezeichnet werden. An dem federnd gelagerten Träger 15 sind Distanzelemente 20 angebracht, die gegenüber dessen Unterseite in Richtung Grundplatte 16 vorstehen. Der Träger 15 weist eine fensterartige Ausnehmung 15.1 auf, welche die auf der Grundplatte 16 gelagerte Matrize 7 mit Spiel umgibt. Die Matrize 7 ist zwischen den beiden Führungsabschnitten 17.1, 17.2 angeordnet und vorzugsweise lösbar auf der Grundplatte 16 montiert. Der Träger (Federboden) 15 ist also mit dem darauf in der Führung 17 gehaltenen Stützkern 8 relativ zu der Matrize 7 bewegbar.

Die Kopfplatte 9 ist an ihrer Unterseite neben den Abkantbacken 5.1, 5.2 mit Verdrängungselementen 21 versehen. Die Verdrängungselemente (Verdränger) 21 sind vorzugsweise stift- oder bolzenförmig ausgebildet. Beim Schießen des erfindungsgemäßen Folgeverbundwerkzeuges berühren die Verdrängungselemente 21 den auf der Grundplatte 16 vorzugsweise federnd gelagerten Träger 15 bzw. die mit dem Träger verbundenen, den Stützkern 6 haltenden Führungsabschnitte 17.1, 17.2.

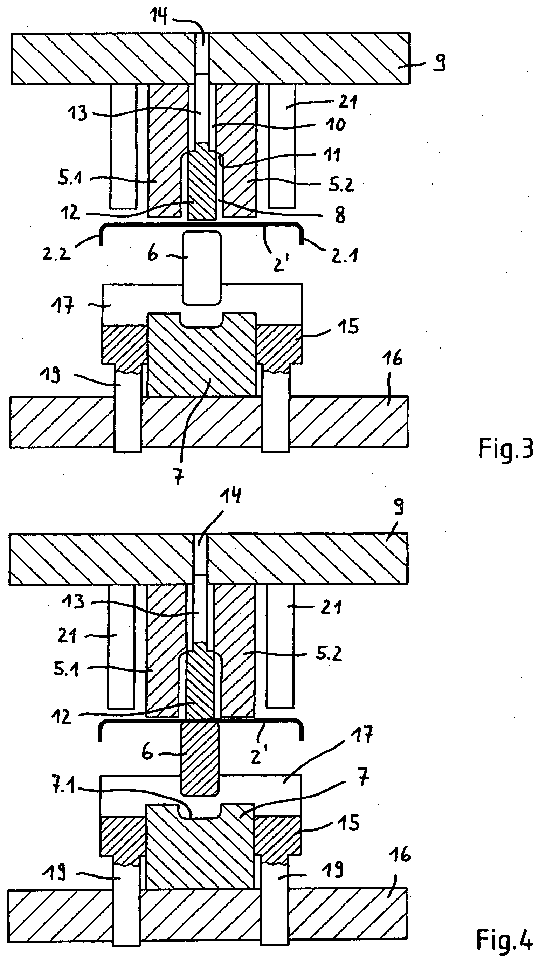

Im Folgenden wird nun anhand der Figuren 3 bis 8 die Funktionsweise des erfindungsgemäßen Folgeverbundwerkzeuges erläutert.

Fig. 3 zeigt eine Ausgangslage, in welcher das Folgeverbundwerkzeug geöffnet ist, indem das obere Werkzeugteil gegenüber dem untere Werkzeugteil nach oben verfahren wurde. Das streifenförmige Metallblech 1 liegt mit dem freigeschnittenen, U-förmig vorgeformten Blechabschnitt 2, der über Verbindungsstege 3 noch einstückig mit dem streifenförmigen Metallblech 1 verbunden ist (vgl. Fig. 9), im Arbeitsbereich des Werkzeuges, wobei das streifenförmigen Metallblech 1 auf eine bestimmte Transporthöhe angehoben ist. Der mit einem Antrieb (nicht gezeigt) versehene Stützkern 6 befindet sich in einer zurückgezogenen Position auf dem größeren Abschnitt 17.1 der Führung 17. Das vorzugsweise federbelastete Druckstück (Gesenkeinlage) 12 befindet sich in dem durch die Abkantbacken 5.1, 5.2 definierten breiteren Spalt 8 und steht etwas gegenüber den der Matrize zugewandten Stirnflächen 5.3, 5.4 der Abkantbacken 5.1, 5.2 vor. Der Federboden (Träger) 15 mit dem darauf geführten Stützkern 6 befindet sich in seiner angehobenen, von der Grundplatte 16 maximal beabstandeten Stellung.

Fig. 4 ist eine Situation gezeigt, in welcher der Stützkern 6 unter den vorgeformten Blechabschnitt 2' gefahren ist, so dass der Stützkern 6 auf beiden Abschnitten 17.1, 17.2 der Führung 17 aufliegt und die fensterartige Ausnehmung 15.1 des plattenförmigen Trägers 15 überbrückt. Das streifenförmige Metallblech 1 wurde auf eine Arbeitsebene abgesenkt, so dass der vorgeformte Blechabschnitt 2' auf dem Stützkern 6 aufliegt. Zudem wurde das obere Werkzeugteil abgesenkt, so dass der vorgeformte Blechabschnitt 2' zwischen Stützkern (Schieber) 6 und Druckstück (Gesenkeinlage) 12 eingespannt ist. Der von den Unterluftbolzen 19 ausgeübte Gegendruck (bzw. die entsprechende Gegenkraft) ist größer als die Kraft, die benötigt wird, um den vorgeformten Blechabschnitt 2' abzukanten, zuzüglich der Kraft, die durch das Druckstück 12 ausgeübt wird.

Fig. 5 zeigt dann die Situation, in welcher der vorgeformte Blechabschnitt 2' abgekantet wurde, indem das obere Werkzeugteil soweit abgesenkt wurde, dass der Stützkern 6 mit dem Blechabschnitt 2' in den Spalt (Hohlraum) 8 zwischen den Abkantbacken 5.1, 5.2 eingeschoben ist und an dem von den Abkantbacken definierten Anschlag 11 anliegt. Gleichzeitig wurde das den Blechabschnitt 2' einspannende Druckstück 12 in den oberen, schmaleren Spalt (Hohlraum) 10 verdrängt. Die mit dem Druckstück 12 verbundenen Führungselemente 13 stehen nun gegenüber der Oberseite der Kopfplatte 9 vor. Des Weiteren haben die Verdrängungselemente (Verdränger) 21 in dieser Situation auf der Führung 17 und damit auf dem vorzugsweise federnd gelagerten Träger 15 aufgesetzt. Die Längskanten 4 des so hergestellten Schlitzprofils 2' sind an der Unterseite des Stützkerns 6 einander zugewandt. Die Längskanten 4 können sich dabei berühren oder durch einen sehr schmalen Schlitz 22 voneinander beabstandet sein.

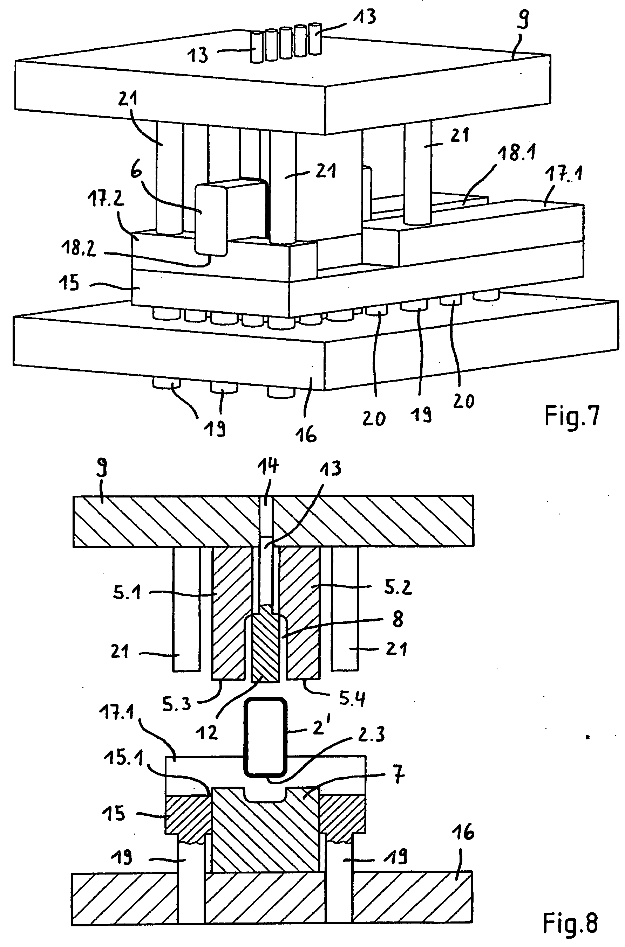

Wird das obere Werkzeugteil gegenüber der in Fig. 5 dargestellten Situation weiter abgesenkt, so drücken die Verdrängungselemente (Verdränger) 21 unter Verdrängung der Unterluftbolzen 19 oder Kompression entsprechender alternativer Federelemente gegen die Führung 17 und damit gegen den Träger 15. Der Träger 15 wird oder kann soweit in Richtung Grundplatte 16 verdrängt werden, bis die Distanzelemente 20 auf der Grundplatte 16 aufsetzen. Dabei wird das zumindest teilweise geschlossene Profil 2' mit dem darin angeordneten Stützkern 6 in die Ausnehmung 7.1 der Matrize 7 gepresst und dadurch gestaucht bzw. kalibriert (siehe Figuren 6 und 7). Auf diese Weise wird nicht nur einem unkontrollierten Rückfedern entgegengewirkt, zudem können so auch Eigenspannungen im Bauteil 2' minimiert werden.

Anschließend wird das obere Werkzeugteil wieder angehoben, wobei die Unterluftbolzen 19 (oder ähnliche Federelemente) den Träger 15 in seine Ausgangslage zurückdrücken.

In Fig. 8 ist schließlich die Situation gezeigt, in welcher sich das erfindungsgemäße Werkzeug wieder in seiner Ausgangslage befindet. Der Stützkern (Schieber) 6 ist aus dem Arbeitsbereich zurückgefahren und gibt das hergestellte rohrförmige Bauteil bzw. Schlitzprofil 2', das noch durch die Verbindungsstege 3 mit dem streifenförmigen Metallblech 1 verbunden ist, frei (vgl. Fig. 10).

Die Längskanten 4 des Schlitzprofils 2' werden in einem nachfolgenden Prozessschritt zu einem geschlossenen Hohlprofil im Stumpfstoß miteinander verschweißt, wofür vorzugweise eine Laserschweißvorrichtung (nicht gezeigt) verwendet wird. Die so hergestellten Bauteile 2' finden vorzugsweise als Strukturbauteile im Fahrzeugbau Verwendung, beispielsweise als geschlossene Profile für Stoßfänger, sogenannte Crashboxen, Längsholme, Querholme, Sitzträgerprofile, etc. Das Verschweißen der Längskanten 4 kann gegebenenfalls auch zu einem späteren Zeitpunkt in einer separaten Vorrichtung erfolgen.

Die Ausführung der Erfindung ist nicht auf die vorstehend beschriebenen und in der Zeichnung dargestellten Ausführungsbeispiele beschränkt. Vielmehr sind zahlreiche Varianten denkbar, die auch bei von den gezeigten Beispielen abweichender Ausgestaltung unter die beigefügten Ansprüche fallen. So umfasst das erfindungsgemäße Verfahren beispielsweise auch Ausführungsformen, bei denen zwei Stützkerne 6 verwendet werden, die unterschiedliche Querschnittsformen aufweisen und von gegenüberliegenden Seiten zusammengebracht und nach Formung des Profils oder Bauteils auseinander bewegt werden. Des Weiteren umfasst das erfindungsgemäße Verfahren beispielsweise auch Ausführungsformen, bei denen zumindest einer der Stützkerne 6 zwei, drei oder mehr Abschnitte unterschiedlicher Querschnittsform aufweist, wobei der Durchmesser der Querschnittsform bei drei oder mehr Abschnitten des Stützkerns von einem kleinsten Durchmesser zu einem größten Durchmesser stufenweise oder kontinuierlich zunimmt, und wobei die Abkantbacken 5.1, 5.2 eine den Stützkern 6 mit einem daran anliegenden Metallblechabschnitt 2' aufnehmende Ausnehmung begrenzen, die entsprechend dem Stützkern 6 stufenförmig oder kontinuierlich erweitert ist.

## Patentansprüche

1. Vorrichtung zum Herstellen von zumindest teilweise geschlossenen Profilen oder rohrförmigen Bauteilen aus Metallblech, mit einem eine Matrize (7) aufweisenden ersten Werkzeugteil, einem Abkantbacken (5.1, 5.2) aufweisenden zweiten Werkzeugteil und mindestens einem Stützkern (6), der in Kontakt mit einem zugeschnittenen, U-förmig umgeformten Metallblechabschnitt (2') zwischen die Abkantbacken einschiebbar ist, **dadurch gekennzeichnet, dass** die Einschubbewegung des Stützkerns (6) zwischen die Abkantbacken (5.1, 5.2) durch einen Anschlag (11) begrenzt ist und der Stützkern (6) in seiner durch den Anschlag (11) begrenzten Einschubstellung gegenüber den Abkantbacken (5.1, 5.2) in Richtung der Matrize (7) vorsteht, wobei der Stützkern (6) auf einem relativ zu der Matrize (7) beweglichen Träger (15) angeordnet ist, und wobei den Abkantbacken (5.1, 5.2) mindestens ein starr damit verbundenes Verdrängungselement (21) zugeordnet ist, das den Träger (15) berührt, wenn der abgekantete Metallblechabschnitt (2') den Stützkern (6) umgreift, und bei fortgesetzter Bewegung der Abkantbacken (5.1, 5.2) in Richtung Matrize (7) den Träger (15) verschiebt und/oder der Träger (15) bewegt wird, so dass das aus dem Metallblechabschnitt gebildete Profil oder Bauteil (2') zum Zwecke seiner Kalibrierung und/oder Stauchung mit dem Stützkern (6) in die Matrize (7) einführbar ist.

2. Vorrichtung nach Anspruch 1, **dadurch gekennzeichnet, dass** zwischen den Abkantbacken (5.1, 5.2) ein bewegliches Druckstück (12) angeordnet ist, das beim Abkanten des Metallblechabschnittes (2') mittels der Abkantbacken mit dem Stützkern (6) bewegt wird, wobei das Druckstück (12) vorzugsweise federnd gelagert ist und vorzugsweise durch den Stützkern (6) verdrängt wird.

3. Vorrichtung nach Anspruch 1 oder 2, **dadurch gekennzeichnet, dass** der Träger (15) mit einer den Stützkern (6) stützenden Führung (17) versehen ist, die mindestens zwei voneinander beabstandte Führungsabschnitte (17.1, 17.2) aufweist, in denen kanalförmige, miteinander fluchtende Führungsbahnen (18.1, 18.2) zur Aufnahme des Stützkernes (6) ausgebildet sind, wobei die Matrize (7) zwischen den beiden Führungsabschnitten (17.1, 17.2) angeordnet ist.

4. Vorrichtung nach einem der Ansprüche 1 bis 3, **dadurch gekennzeichnet, dass** der Träger (15) über eine Vielzahl von Federelementen (19), vorzugsweise Unterluftbolzen federnd auf einer Grundplatte (16) abgestützt ist.

5. Vorrichtung nach Anspruch 4, **dadurch gekennzeichnet, dass** an der Unterseite des Trägers (15) nach unten vorstehende Distanzelemente (20) vorgesehen sind.

6. Vorrichtung nach einem der Ansprüche 1 bis 5, **dadurch gekennzeichnet, dass** die Abkantbacken (5.1, 5.2) und das oder die Verdrängungselemente (21) über eine Kopfplatte (9) miteinander verbunden sind.

7. Vorrichtung nach Anspruch 6, **dadurch gekennzeichnet, dass** die Kopfplatte (9) Bohrungen oder Durchbrechungen (14) zur Führung von mit dem Druckstück (12) verbundenen Führungsstiften (13) aufweist.

8. Vorrichtung nach einem der Ansprüche 1 bis 7, **dadurch gekennzeichnet, dass** sie als Folgeverbundwerkzeug für eine Folgeverbundpresse ausgebildet ist.

9. Vorrichtung nach einem der Ansprüche 1 bis 8, **dadurch gekennzeichnet, dass** der Stützkern (6) zwei, drei oder mehr Abschnitte unterschiedlicher Querschnittsform aufweist, wobei der Durchmesser der Querschnittsform bei drei oder mehr Abschnitten von einem kleinsten Durchmesser zu einem größten Durchmesser stufenweise oder kontinuierlich zunimmt, und wobei die Abkantbacken (5.1, 5.2) eine den Stützkern (6) mit einem daran anliegenden Metallblechabschnitt (2') aufnehmende Ausnehmung begrenzen, die entsprechend dem Stützkern (6) stufenförmig oder kontinuierlich erweitert ist.

10. Vorrichtung nach einem der Ansprüche 1 bis 9, **dadurch gekennzeichnet, dass** ein zweiter Stützkern vorhanden ist, der zu dem ersten Stützkern symmetrisch ist oder eine andere Querschnittsform als der erste Stützkern aufweist.

11. Vorrichtung nach Anspruch 10, **dadurch gekennzeichnet, dass** der zweite Stützkern zwei, drei oder mehr Abschnitte unterschiedlicher Querschnittsform aufweist, wobei der Durchmesser der Querschnittsform bei drei oder mehr Abschnitten von einem kleinsten Durchmesser zu einem größten Durchmesser stufenweise oder kontinuierlich zunimmt, und wobei die Abkantbacken (5.1, 5.2) eine den zweiten Stützkern mit einem daran anliegenden Metallblechabschnitt aufnehmende Ausnehmung begrenzen, die entsprechend dem zweiten Stützkern stufenförmig oder kontinuierlich erweitert ist.

12. Vorrichtung nach einem der Ansprüche 1 bis 11, **dadurch gekennzeichnet, dass** sie als Doppel-Werkzeug oder Doppel-Folgeverbundwerkzeug zum zeitgleichen Formen von zwei zumindest teilweise geschlossenen Profilen oder zwei rohrförmigen Bauteilen (2') ausgebildet ist.

13. Verfahren zum Herstellen eines zumindest teilweise geschlossenen Profils oder rohrförmigen Bauteils aus Metallblech, vorzugsweise mit einer Vorrichtung nach einem der Ansprüche 1 bis 12, bei welchem
in einem bandförmigen Metallblech eine umzuformende Platine (2) freigeschnitten wird, so dass die Platine über mindestens zwei Verbindungsstege (3) mit dem bandförmigen Metallblech (1) verbunden bleibt,
in Transportrichtung betrachtet vordere und hintere Kantenbereiche (2.1, 2.2) der mit dem bandförmigen Metallblech (1) verbundenen Platine (2) abgekantet werden, so dass die Platine im Wesentlichen U-förmig vorgeformt wird,
die so vorgeformte, mit dem bandförmigen Metallblech verbundene Platine (2') mittels Abkantbacken (5.1, 5.2) und mindestens eines zwischen den Abkantbacken einschiebbar positionierbaren Stützkerns (6), der auf einem relativ zu einer Matrize (7) beweglichen Träger (15) angeordnet ist, zu einem zumindest teilweise geschlossenen Profil oder rohrförmigen Bauteil umgeformt wird, und das Profil oder Bauteil mit dem darin angeordneten Stützkern (6) unter Bewegung des Trägers (15) relativ zu der Matrize (7) in eine Vertiefung (7.1) der Matrize (7) eingeführt und dadurch mittels derselben kalibriert und/oder gestaucht wird.

14. Verfahren nach Anspruch 13, **dadurch gekennzeichnet, dass** die freigeschnittene Platine (2), der Stützkern (6), die Abkantbacken (5.1, 5.2) und die das Profil oder Bauteil aufnehmende Vertiefung (7.1) der Matrize (7) so dimensioniert sind oder werden, dass das Profil oder Bauteil (2') in der Matrize (7) gestaucht wird.

15. Verfahren nach Anspruch 13 oder 14, **dadurch gekennzeichnet, dass** zwei Stützkerne (6) verwendet werden, die zueinander symmetrisch sind oder unterschiedliche Querschnittsformen aufweisen und von gegenüberliegenden Seiten zusammengebracht und nach Formung des Profil oder Bauteils auseinander bewegt werden.

16. Verfahren nach Anspruch 15, **dadurch gekennzeichnet, dass** zumindest einer der Stützkerne (6) zwei, drei oder mehr Abschnitte unterschiedlicher Querschnittsform aufweist, wobei der Durchmesser der Querschnittsform bei drei oder mehr Abschnitten des Stützkerns von einem kleinsten Durchmesser zu einem größten Durchmesser stufenweise oder kontinuierlich zunimmt, und wobei die Abkantbacken (5.1, 5.2) eine den Stützkern (6) mit einem daran anliegenden Metallblechabschnitt (2') aufnehmende Ausnehmung begrenzen, die entsprechend dem Stützkern (6) stufenförmig oder kontinuierlich erweitert ist.

17. Verfahren nach einem der Ansprüche 13 bis 16, **dadurch gekennzeichnet, dass** die Längskanten (4) des zumindest teilweise geschlossenen Profils oder rohrförmigen Bauteils (2') im Stumpfstoß mittels Schweißen, vorzugsweise Laserschweißen verbunden werden.

## Claims

1. Device for producing at least partially closed profiles or tubular components from metal sheet, with a first tool part having a die (7), a second tool part having bending jaws (5.1, 5.2) and at least one supporting core (6), which is insertable between the bending jaws in contact with a cut-to-size metal sheet portion (2') formed in a U-shape, **characterised in that** the insertion movement of the supporting core (6) between the bending jaws (5.1, 5.2) is limited by a stop (11) and the supporting core (6), in its insertion position limited by the stop (11), protrudes in the direction of the die (7) in relation to the bending jaws (5.1, 5.2), the supporting core (6) being arranged on a carrier (15) that is movable relative to the die (7), and the bending jaws (5.1, 5.2) being assigned at least one displacement element (21) rigidly connected thereto, which touches the carrier (15) when the bent metal sheet portion (2') engages around the supporting core (6), and, upon continued movement of the bending jaws (5.1, 5.2) in the direction of the die (7), displaces the carrier (15) and/or the carrier (15) is moved so that the profile or component (2') formed from the metal sheet portion is introducible into the die (7) for the purpose of its calibration and/or compression with the supporting core (6).

2. Device according to claim 1, **characterised in that** arranged between the bending jaws (5.1, 5.2) is a movable pressure piece (12), which is moved with the supporting core (6) upon bending of the metal sheet portion (2') by means of the bending jaws, the pressure piece (12) preferably being resiliently mounted and preferably being displaced by the supporting core (6).

3. Device according to either claim 1 or claim 2, **characterised in that** the carrier (15) is provided with a guide (17) supporting the supporting core (6), said guide having at least two guide portions (17.1, 17.2), which are spaced apart from one another and in which channel-shaped guide paths (18.1, 18.2) that align with one another are configured to receive the supporting core (6), the die (7) being arranged between the two guide portions (17.1, 17.2).

4. Device according to any one of claims 1 to 3, **characterised in that** the carrier (15) is resiliently supported on a base plate (16) by means of a large number of spring elements (19), preferably lower air pins.

5. Device according to claim 4, **characterised in that** downwardly protruding spacer elements (20) are provided on the lower side of the carrier (15).

6. Device according to any one of claims 1 to 5, **characterised in that** the bending jaws (5.1, 5.2) and the displacement element(s) (21) are connected to one another by a head plate (9).

7. Device according to claim 6, **characterised in that** the head plate (9) has bores or openings (14) to guide guide pins (13) connected to the pressure piece (12).

8. Device according to any one of claims 1 to 7, **characterised in that** it is configured as a follow-on composite tool for a follow-on composite press.

9. Device according to any one of claims 1 to 8, **characterised in that** the supporting core (6) has two, three or more portions with a different cross-sectional shape, the diameter of the cross-sectional shape in the case of three or more portions increasing step-wise or continuously from a smallest diameter to a largest diameter, and the bending jaws (5.1, 5.2) limiting a recess which receives the supporting core (6) with a metal sheet portion (2') resting thereon and is widened step-wise or continuously in accordance with the supporting core (6).

10. Device according to any one of claims 1 to 9, **characterised in that** a second supporting core is present, which is symmetrical with the first supporting core or has a different cross-sectional shape to the first supporting core.

11. Device according to claim 10, **characterised in that** the second supporting core has two, three or more portions with a different cross-sectional shape, the diameter of the cross-sectional shape in the case of three or more portions increasing step-wise or continuously from a smallest diameter to a largest diameter, and the bending jaws (5.1, 5.2) limiting a recess which receives the second supporting core with a metal sheet portion resting thereon and is widened step-wise or continuously in accordance with the second supporting core.

12. Device according to any one of claims 1 to 11, **characterised in that** it is configured as a double tool or double follow-on composite tool for the simultaneous forming of two at least partially closed profiles or two tubular components (2').

13. Method for producing an at least partially closed profile or tubular component from metal sheet, preferably with a device according to any one of claims 1 to 12, wherein, in a band-like metal sheet, a blank (2) to be formed is cut free so the blank remains connected to the band-like metal sheet (1) by means of at least two connecting webs (3), front and rear end regions (2.1, 2.2), viewed in the transporting direction, of the blank (2) connected to the band-like metal sheet (1) are bent, so the blank is substantially preformed in a U-shape, the blank (2') connected to the band-like metal sheet and preformed in this manner is formed into an at least partially closed profile or tubular component by means of bending jaws (5.1, 5.2) and at least one supporting core (6), which can be insertably positioned between the bending jaws and is arranged on a carrier (15) that is movable relative to a die (7), and the profile or component with the supporting core (6) arranged therein, with movement of the carrier (15) relative to the die (7), is introduced into a recess (7.1) of the die (7) and is thereby calibrated and/or compressed by means of said die.

14. Method according to claim 13, **characterised in that** the blank (2) that has been cut free, the supporting core (6), the bending jaws (5.1, 5.2) and the recess (7.1) of the die (7) receiving the profile or component are, or become, dimensioned in such a way that the profile or component (2') is compressed in the die (7).

15. Method according to either claim 13 or claim 14, **characterised in that** two supporting cores (6) are used, which have cross-sectional shapes that are symmetrical with respect to one another or different and which are brought together from opposing sides and moved apart after the forming of the profile or component.

16. Method according to claim 15, **characterised in that** at least one of the supporting cores (6) has two, three or more portions with a different cross-sectional shape, the diameter of the cross-sectional shape in the case of three or more portions of the supporting core increasing step-wise or continuously from a smallest diameter to a largest diameter, and the bending jaws (5.1, 5.2) limiting a recess which receives the supporting core (6) with a metal sheet portion (2') resting thereon and is widened step-wise or continuously in accordance with the second supporting core (6).

17. Method according to any one of claims 13 to 16, **characterised in that** the longitudinal edges (4) of the at least partially closed profile or tubular component (2') are connected in a butt joint by welding, preferably laser welding.

## Revendications

1. Dispositif de fabrication de profilés au moins partiellement fermés ou de composants de forme tubulaire, à partir d'une tôle métallique, ledit dispositif comprenant une première partie d'outil présentant une matrice (7), une seconde partie d'outil présentant des mâchoires de chanfreinage (5.1, 5.2) et au moins un noyau d'appui (6) qui, en contact avec une partie de tôle métallique (2') découpée et façonnée en forme de U, peut être introduit en coulissant entre les mâchoires de chanfreinage, **caractérisé en ce que** le mouvement d'insertion du noyau d'appui (6) coulissant entre les mâchoires de chanfreinage (5.1, 5.2) est limité par une butée (11), et le noyau d'appui (6), dans sa position d'insertion, par coulissement, limitée par la butée (11), est en saillie par rapport aux mâchoires de chanfreinage (5.1, 5.2) en direction de la matrice (7), où le noyau d'appui (6) est disposé sur un support (15) mobile par rapport à la matrice (7), et où au moins un élément de déplacement (21) est associé aux mâchoires de chanfreinage (5.1, 5.2) en étant fixement combiné à celles-ci, lequel élément de déplacement touche le support (15) quand la partie de tôle métallique chanfreinée (2') enveloppe le noyau d'appui (6) et, quand le mouvement des mâchoires de chanfreinage (5.1, 5.2) continue, ledit élément de déplacement déplace le support (15) en direction de la matrice (7) et/ou le support (15) est déplacé, de sorte que le profilé ou le composant (2') formé à partir de la partie de tôle métallique peut être introduit dans la matrice (7) avec le noyau d'appui (6), dans le but d'y effectuer le calibrage et/ou le refoulement dudit profilé ou composant.

2. Dispositif selon la revendication 1, **caractérisé en ce qu'**une pièce de pression (12), mobile, est disposée entre les mâchoires de chanfreinage (5.1, 5.2), laquelle pièce de pression est déplacée avec le noyau d'appui (6) lors du chanfreinage de la partie de tôle métallique (2') au moyen des mâchoires de chanfreinage, où la pièce de pression (12) est de préférence montée de façon élastique et est de préférence déplacée par le noyau d'appui (6).

3. Dispositif selon la revendication 1 ou 2, **caractérisé en ce que** le support (15) est doté d'un guidage (17) supportant le noyau d'appui (6), lequel guidage présente au moins deux parties de guidage (17.1, 17.2) espacées l'une de l'autre, parties de guidage dans lesquelles sont configurées des voies de guidage (18.1, 18.2) en forme de canaux, alignées l'une avec l'autre, et servant à recevoir le noyau d'appui (6), où la matrice (7) est disposée entre les deux parties de guidage (17.1, 17.2).

4. Dispositif selon l'une quelconque des revendications 1 à 3, **caractérisé en ce que** le support (15) est supporté par une multiplicité d'éléments élastiques (19), de préférence des boulons inférieure faisant ressort sur une plaque de base (16).

5. Dispositif selon la revendication 4, **caractérisé en ce qu'**il est prévu, sur le dessous du support (15), des éléments d'espacement (20) dépassant vers le bas.

6. Dispositif selon l'une quelconque des revendications 1 à 5, **caractérisé en ce que** les mâchoires de chanfreinage (5.1, 5.2) et le ou les élément(s) de déplacement (21) sont assemblés entre eux par une plaque de tête (9).

7. Dispositif selon la revendication 6, **caractérisé en ce que** la plaque de tête (9) présente des perçages ou des passages (14) servant au guidage de goupilles de guidage (13) combinées avec la pièce de pression (12).

8. Dispositif selon l'une quelconque des revendications 1 à 7, **caractérisé en ce qu'**il est conçu comme un outil à suivre composé pour une presse d'outils à suivre composés.

9. Dispositif selon l'une quelconque des revendications 1 à 8, **caractérisé en ce que** le noyau d'appui (6) présente deux, trois parties ou plus ayant une section de forme différente, où le diamètre de la forme de la section, dans le cas de trois parties ou plus, augmente de façon graduelle ou de façon continue, passant d'un diamètre le plus petit à un diamètre le plus grand, et où les mâchoires de chanfreinage (5.1, 5.2) limitent un évidement recevant le noyau d'appui (6) ayant une partie de tôle métallique (2') contiguë à celui-ci, lequel évidement est élargi de façon graduelle ou de façon continue, en corrélation avec le noyau d'appui (6).

10. Dispositif selon l'une quelconque des revendications 1 à 9, **caractérisé en ce qu'**il y a un second noyau d'appui qui est symétrique par rapport au premier noyau d'appui ou présente une forme de section autre que celle du premier noyau d'appui.

11. Dispositif selon la revendication 10, **caractérisé en ce que** le second noyau d'appui présente deux, trois parties ou plus ayant une section de forme différente, où le diamètre de la forme de la section, dans le cas de trois parties ou plus, augmente de façon graduelle ou de façon continue, passant d'un diamètre le plus petit à un diamètre le plus grand, et où les mâchoires de chanfreinage (5.1, 5.2) limitent un évidement recevant le second noyau d'appui ayant une partie de tôle métallique contiguë à celui-ci, lequel évidement est élargi de façon graduelle ou de façon continue, en corrélation avec le second noyau d'appui.

12. Dispositif selon l'une quelconque des revendications 1 à 11, **caractérisé en ce qu'**il est conçu comme un double outil ou comme un double outil à suivre composé servant au formage, se produisant simultanément, de deux profilés au moins partiellement fermés ou de deux composants (2') de forme tubulaire.

13. Procédé de fabrication d'un profilé au moins partiellement fermé ou d'un composant de forme tubulaire, à partir d'une tôle métallique, de préférence avec un dispositif selon l'une quelconque des revendications 1 à 12, procédé dans lequel une platine (2) à transformer est découpée dans une tôle métallique en forme de bande, de sorte que la platine reste combinée avec la tôle métallique (1) en forme de bande, par au moins deux traverses de jonction (3),
en regardant dans la direction de transport, des zones d'arêtes avant et arrière (2.1, 2.2) de la platine (2) combinée avec la tôle métallique (1) en forme de bande sont chanfreinées, de sorte que la platine est préformée pratiquement en forme de U,
la platine (2') ainsi préformée, combinée avec la tôle métallique en forme de bande, est transformée en un profilé au moins partiellement fermé ou en un composant de forme tubulaire, au moyen de mâchoires de chanfreinage (5.1, 5.2) et au moyen d'au moins un noyau d'appui (6) pouvant être positionné et inséré en coulissant entre les mâchoires de chanfreinage, lequel noyau d'appui est disposé sur un support (15) mobile par rapport à une matrice (7), et le profilé ou le composant ayant le noyau d'appui (6) disposé à l'intérieur de l'un ou l'autre de ces éléments est introduit dans une cavité (7.1) de la matrice (7), par un mouvement du support (15) par rapport à la matrice (7) et, en procédant ainsi, ledit profilé ou composant est calibré et/ou refoulé au moyen de cette même cavité de matrice.

14. Procédé selon la revendication 13, **caractérisé en ce que** la platine découpée (2), le noyau d'appui (6), les mâchoires de chanfreinage (5.1,5.2) et la cavité (7.1) de la matrice (7) recevant le profilé ou le composant, sont dimensionnés ou ont été dimensionnés de manière telle, que le profilé ou le composant (2') soit refoulé dans la matrice (7).

15. Procédé selon la revendication 13 ou 14, **caractérisé en ce que** l'on utilise deux noyaux d'appui (6) qui sont symétriques l'un par rapport à l'autre, ou bien présentent différentes formes de section et sont rassemblés à partir de côtés opposés et, après formage du profilé ou du composant, sont déplacés en s'écartant l'un de l'autre.

16. Procédé selon la revendication 15, **caractérisé en ce qu'**au moins l'un des noyaux d'appui (6) présente deux, trois parties ou plus, de forme de section différente, où le diamètre de la forme de la section, dans le cas de trois parties du noyau d'appui, ou plus, augmente de façon graduelle ou de façon continue, passant d'un diamètre le plus petit à un diamètre le plus grand, et où les mâchoires de chanfreinage (5.1, 5.2) limitent un évidement recevant le noyau d'appui (6) ayant une partie de tôle métallique (2') contiguë à celui-ci, lequel évidement est élargi de façon graduelle ou de façon continue, en corrélation avec le noyau d'appui (6).

17. Procédé selon l'une quelconque des revendications 13 à 16, **caractérisé en ce que** les arêtes longitudinales (4) du profilé au moins partiellement fermé ou du composant de forme tubulaire (2'), sont, dans l'assemblage bord à bord, jointes par soudage, de préférence par soudage laser.
